# EUROPEAN PATENT SPECIFICATION

(11) **EP 1 652 390 B1**
(45) Date of publication and mention of the grant of the patent: **13.08.2008**
(21) Application number: 04733612.8
(22) Date of filing: 18.05.2004
(51) Int. Cl.: H04Q 1/14

(54) **CROSS-CONNECT ARRANGEMENT AND SWITCH MATRIX**
QUERVERBINDUNGSANORDNUNG UND -KOPPELFELD& x9;
DISPOSITIFS ET PROCEDE ASSURANT UNE FONCTIONNALITE DE CONNEXION REDONDANTE DANS UNE MATRICE DE COMMUTATION

(30) Priority: 19.05.2003 SE 0301439
(43) Date of publication of application: 03.05.2006
(73) Proprietor: Nordia Innovation AB, 103 90 Stockholm (SE)
(72) Inventor: ROOS, Sture, deceased (BR)
(74) Representative: Herbjörnsen, Rut
(86) International application number: PCT/IB2004/050739
(87) International publication number: WO 2004/102988

(56) References cited:
- US-A- 4 817 134
- US-A- 5 809 221

## Description

### Field of Invention

The present invention relates to a switch matrix for making cross-connections for telephone lines and, more particularly, to a switch matrix comprising a plurality of switch components operated by a drive mechanism

### Background

In a switch matrix for making cross-connects within a telecommunications network using a drive mechanism to connect a plurality of cross-connect points, for example, in a rotary type switch, a failure of the drive mechanism will result in several cross-connect points being inaccessible for making connections. If these cross-connect points are oriented towards a telephone line, the line will not be able to be switched over. The problem can sometimes be corrected by orienting the switch in the other direction; however, in the above case the desired function cannot be applied in the line direction. However, it is possible to design a break or disconnect line function into the example accordingly.

There is a need to provide cross-connect redundancy in switch matrices to enable the switch matrix to continue to operate when the drive mechanism fails. There are various known means by which to switch copper lines in a telephone network, such as using electromechanical relays or robotic pick-and-place solutions that places conductive pins in holes to make the cross-connect. However, none of the prior art solutions have redundancy capability, i.e. the cross-connect in the switch matrix cannot be switched over to a backup when there is a failure. US 4,817,134 shows an automated matrix for communication line connections.

### Summary

An object of the present invention is to provide a solution for the aforementioned redundancy problem and provide a switch matrix that will continue to be operable in the event of a failure. The invention provides the addition of redundancy functionality to a switch matrix.

The invention discloses a cross-connect arrangement for cross-connecting telephone lines, comprising:
a plurality of switch components that include pairs of first and second contact points, drive means, contact block means that is arranged to cross-connect a selected pair of a first and a second contact point;
input lines;
output lines;
first switch components whose first contact points are connected to a respective first input line,
and whose second contact point in each pair is connected to a respective output line that is commonly connected to said first switch components;
and wherein said first switch components are arranged for connecting a respective input line with a selected output line;
a second switch component whose first contact points are connected to the input lines;
a third switch component whose first contact points are connected to the second contact points of the second switch component, and whose second contact points are connected to the output lines;
and wherein said second switch component and said third switch component are arranged for connecting any selected input line to any selected output line.

The invention relates to a switch matrix arrangement that comprises a plurality of switching components. The components are oriented in the input line direction whereby the cross-connect is made by means of the switch component in the line direction. Another backup or redundant switch component, oriented in the opposite direction, is connected to the plurality of switching components whereby in case of a failure in any of the switch components, the lines are always accessible.

The redundant component is connected to a further switch component in the line direction and is connected to the switching network's output lines. In this way all outputs can be accessible. This arrangement eliminates the need for extra line or cable pairs to be provided. This is important because in some cases a cable with additional pairs is required.

This invention functions relatively straightforwardly, reliably, and requires no additional cabling.

### Brief description of the drawings

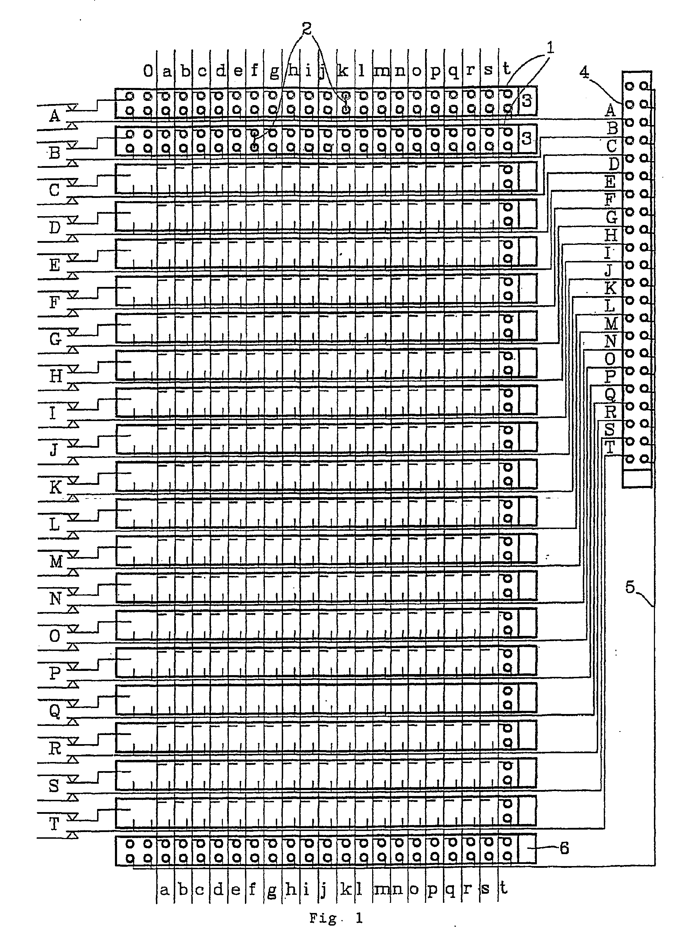

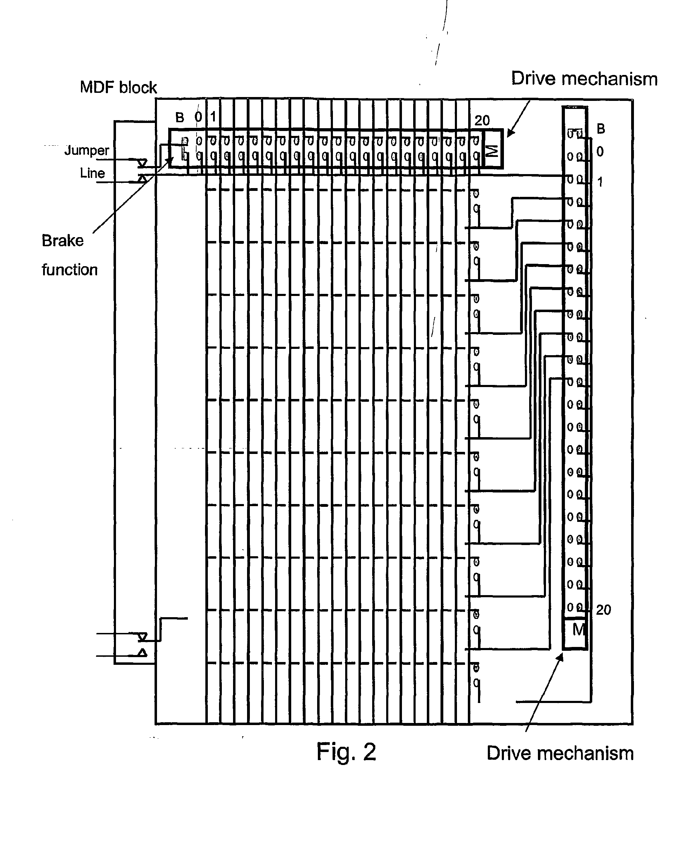

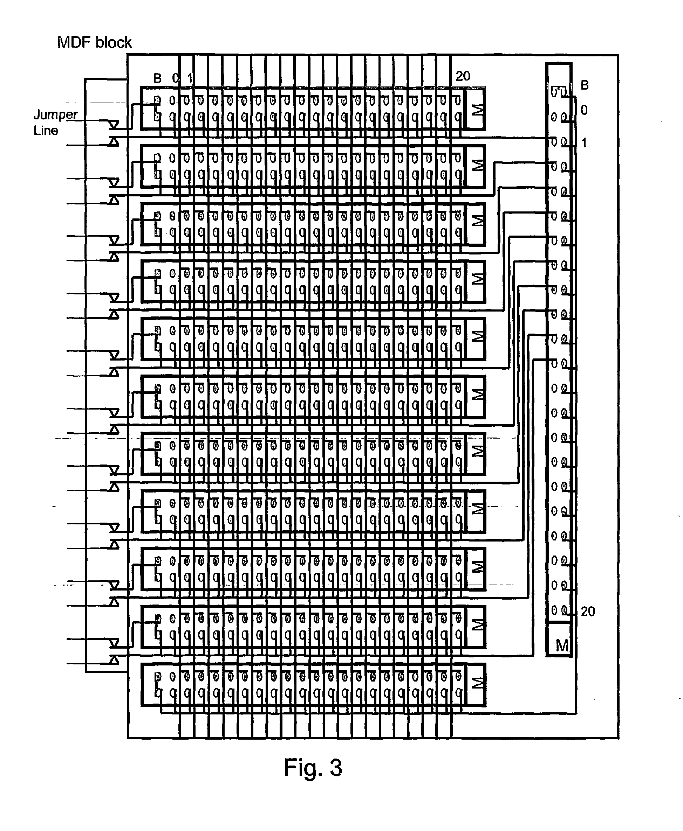

Figures 1-3 illustrate schematically the principle of the invention.

### Description of the invention

The figures show the principle of the invention. A switch matrix with a plurality of switch components 1 are arranged on a PCB. The matrix can be designed for accommodating, for example, 20 x 20 lines, i.e. 20 switch components 1. Each component consists of a number of first contact points (20 in this example), located in a straight line and connected by an incoming line (A, B...T). Parallel to this row of contact points, that is another row of contact points, which are connected by outgoing line (a,b,...t). The corresponding contact point in each of the switch components is connected to the same outgoing line a, b,...t. A contact block or sledge 2 can move parallel to the contact point rows and connect an incoming line with a selected outgoing line via corresponding contact points. By way of example, as shown in Fig. 1, the incoming line A is cross-connected to the outgoing line k and line B is cross-connected to line f by cross-connects 2.

Only one line per line is shown in the figure for simplicity. In practice there are two lines per line making up a line pair, whereby the switch matrix includes double rows of contact points, connected to the second incoming line and the second outgoing line, respectively, and two mutually moveable contact blocks 2. Furthermore, each of the switch components can include two other rows of contact points with moveable contact blocks that move together with the earlier described two blocks. These latter mentioned contact points are connected by a common incoming line and outgoing lines respectively, which can be used for a positioning function, which can be useful in a cross-connect apparatus where one wishes to determine the line connections.

Referring to Fig. 1, the contact block 2 moves by means of a drive mechanism 3 or M. In the case where one of the driving mechanisms fail, the switch matrix cannot be used and the cross-connect will fall out. In accordance with and embodiment of the invention, this problem can be overcome by providing a switch component 4 oriented in another direction on the PCB. This makes it possible to be able to always connect any one of the incoming lines to any one of the outgoing lines in case of failure of one of the driving mechanisms 3 or M in the switch components 1.

By way of example, if switch component 1 for line G fails, the switch component 4 will be oriented so that the contact block makes contact over input G with output line 5, which provides a connection for the input in switch matrix 6 to one of the outputs a,b,...t in the switch matrix. Thus, line G can be redirected to any selected outgoing line despite a failure in switch component 1.

The invention may contain modifications that will occur to those skilled in the art and that such modifications and variations are within the scope of the invention which are only limited by the following claims.

## Claims

1. A cross-connect arrangement for cross-connecting telephone lines, comprising:
a plurality of switch components (1,4,6) that include pairs of first and second contact points, drive means (3), contact block means (2) that is arranged to cross-connect a selected pair of a first and a second contact point;
input lines (A, B...);
output lines (a, b...);
first switch components (1) whose first contact points are connected to a respective first input line (A),
and whose second contact point in each pair is connected to a respective output line (a,b...) that is commonly connected to said first switch components (1),
and wherein said first switch components (1) are arranged for connecting a respective input line (A) with a selected output line (a, b...); **characterised by**
a second switch component (4) whose first contact points are connected to the input lines (A, B...);
a third switch component (6) whose first contact points are connected (5) to the second contact points of the second switch component (4), and whose second contact points are connected to the output lines (a, b...);
and wherein said second switch component (4) and said third switch component (6) are arranged for connecting any selected input line (A, B...) to any selected output line (a, b...).

2. The cross-connect arrangement of claim 1, wherein the pairs of first and second contact points of the first switch components (1) are arranged in a matrix structure having input lines (A, B...) that are arranged perpendicularly to the output lines (a, b...), wherein each pair of contact points is positioned at a cross point capable of cross-connecting an input line (A, B...) and an output line (a, b...).

3. The cross-connect arrangement of claim 2, wherein the first switch components (1) are arranged with parallel rows of contact points in the matrix structure.

4. The cross-connect arrangement of claim 3, wherein the second switch component (4) is arranged with a row of contact points that are perpendicular to the parallel rows of the contact points of the first switch components (1).

5. The cross-connect arrangement of claim 3, wherein the third switch component (6) is arranged with a row of contact points that are parallel with the parallel rows of the contact points of the first switch components (1).

6. A cross-connect arrangement according to claim 2, wherein:
the switch components are constructed as elongated components;
said first switch components (1) and said third switch component (6) are arranged parallel with respect to each other in the matrix structure; and
said second switch component (4) is arranged perpendicularly with respect to the first and third switch components (1,6).

7. A cross-connect arrangement according to claim 1, wherein:
the first switch components (1) are oriented in the line direction corresponding with the input lines (A, B...) from a telephone line connected to the first contact points of respective first switch components, and wherein the output lines (a, b...) are connected to the second contact points of respective first switch components;
the second switch component (4) is oriented perpendicular to the line direction with its first contact points being connected to the input lines (A, B...) and the second contact points being connected to a common line (5); and .
the third switch component (6) is oriented in the line direction such that the first contact points are connected to the common line (5) and with the second contact points being connected to the output lines (a, b...).

8. A cross connect arrangement according to any of claims 1-7, wherein the arrangement is a switch matrix.

## Patentansprüche

1. Querverbindungsanordnung zum Querverbinden von Telefonleitungen, welche aufweist:
mehrere Schaltkomponenten (1, 4, 6), welche Paare erster und zweiter Kontaktpunkte, eine Treibereinrichtung (3) und eine Kontaktblockeinrichtung (2), die eingerichtet ist, um ein ausgewähltes Paar aus einem ersten und einem zweiten Kontaktpunkt quer zu verbinden, aufweisen,
Eingangsleitungen (A, B ...),
Ausgangsleitungen (a, b ...),
erste Schaltkomponenten (1), deren erste Kontaktpunkte mit einer jeweiligen ersten Eingangsleitung (A) verbunden sind und
deren zweiter Kontaktpunkt in jedem Paar mit einer jeweiligen Ausgangsleitung (a, b ...) verbunden ist, die gemeinsam mit den ersten Schaltkomponenten (1) verbunden ist, und
wobei die ersten Schaltkomponenten (1) dafür eingerichtet sind, eine jeweilige Eingangsleitung (A) mit einer ausgewählten Ausgangsleitung (a, b ...) zu verbinden,
**gekennzeichnet durch**
eine zweite Schaltkomponente (4), deren ersten Kontaktpunkte mit den Eingangsleitungen (A, B ...) verbunden sind,
eine dritte Schaltkomponente (6), deren ersten Kontaktpunkte mit den zweiten Kontaktpunkten der zweiten Schaltkomponente (4) verbunden sind (5) und deren zweiten Kontaktpunkte mit den Ausgangsleitungen (a, b ...) verbunden sind,
wobei die zweite Schaltkomponente (4) und die dritte Schaltkomponente (6) dafür eingerichtet sind, jede ausgewählte Eingangsleitung (A, B ...) mit einer ausgewählten Ausgangsleitung (a, b ...) zu verbinden.

2. Querverbindungsanordnung nach Anspruch 1, wobei die Paare der ersten und zweiten Kontaktpunkte der ersten Schaltkomponenten (1) in einer Matrixstruktur eingerichtet sind, die Eingangsleitungen (A, B ...) aufweist, welche senkrecht zu den Ausgangsleitungen (a, b ...) eingerichtet sind, wobei jedes Paar von Kontaktpunkten an einem Kreuzungspunkt positioniert ist, der in der Lage ist, eine Eingangsleitung (A, B ...) und eine Ausgangsleitung (a, b ...) quer zu verbinden.

3. Querverbindungsanordnung nach Anspruch 2, wobei die ersten Schaltkomponenten (1) mit parallelen Zeilen von Kontaktpunkten in der Matrixstruktur eingerichtet sind.

4. Querverbindungsanordnung nach Anspruch 3, wobei die zweite Schaltkomponente (4) mit einer Zeile von Kontaktpunkten eingerichtet ist, die senkrecht zu den parallelen Zeilen der Kontaktpunkte der ersten Schaltkomponenten (1) verlaufen.

5. Querverbindungsanordnung nach Anspruch 3, wobei die dritte Schaltkomponente (6) mit einer Zeile von Kontaktpunkten eingerichtet ist, die zu den parallelen Zeilen der Kontaktpunkte der ersten Schaltkomponenten (1) parallel verlaufen.

6. Querverbindungsanordnung nach Anspruch 2, wobei
die Schaltkomponenten als lang gestreckte Komponenten aufgebaut sind,
die ersten Schaltkomponenten (1) und die dritte Schaltkomponente (6) in der Matrixstruktur parallel zueinander eingerichtet sind und
die zweite Schaltkomponente (4) senkrecht zu den ersten und dritten Schaltkomponenten (1, 6) eingerichtet ist.

7. Querverbindungsanordnung nach Anspruch 1, wobei:
die ersten Schaltkomponenten (1) von einer Telefonleitung, die mit den ersten Kontaktpunkten der jeweiligen ersten Schaltkomponenten verbunden ist, in der Leitungsrichtung orientiert sind, die den Eingangsleitungen (A, B ...) entspricht, und wobei die Ausgangsleitungen (a, b ...) mit den zweiten Kontaktpunkten jeweiliger erster Schaltkomponenten verbunden sind,
die zweite Schaltkomponente (4) senkrecht zur Leitungsrichtung orientiert ist, wobei ihre ersten Kontaktpunkte mit den Eingangsleitungen (A, B ...) verbunden sind und die zweiten Kontaktpunkte mit einer gemeinsamen Leitung (5) verbunden sind, und
die dritte Schaltkomponente (6) in der Leitungsrichtung orientiert ist, so dass die ersten Kontaktpunkte mit der gemeinsamen Leitung (5) verbunden sind, und wobei die zweiten Kontaktpunkte mit den Ausgangsleitungen (a, b ...) verbunden sind.

8. Querverbindungsanordnung nach einem der Ansprüche 1 bis 7, wobei die Anordnung ein Koppelfeld ist.

## Revendications

1. Dispositif d'interconnexion destiné à interconnecter des lignes téléphoniques comprenant :
une pluralité de composants de commutation (1, 4, 6) qui incluent des paires de premier point de contact et de second point de contact, un moyen d'entraînement (3), un moyen de bloc de contact (2) qui est disposé pour interconnecter une paire choisie de premier point de contact et second point de contact ;
des lignes d'entrée (A, B...) ;
des lignes de sortie (a, b...) ;
des premiers composants de commutation (1) dont les premiers points de contact sont connectés à une première ligne d'entrée respective (A)
et dont le second point de contact de chaque paire est connecté à une ligne de sortie respective (a, b...) qui est connectée en commun auxdits premiers composants de commutation (1),
et dans lequel lesdits premiers composants de commutation (1) sont disposés pour connecter une ligne d'entrée respective (A) à une ligne de sortie choisie (a, b...)
**caractérisé par**
un second composant de commutation (4) dont les premiers points de contact sont connectés aux lignes d'entrée (A, B...) ;
un troisième composant de commutation (6) dont les premiers points de contact sont connectés (5) aux seconds points de contact du second composant de commutation (4) et dont les seconds points de contact sont connectés aux lignes de sortie (a, b...) ;
et dans lequel ledit second composant de commutation (4) et ledit troisième composant de commutation (6) sont disposés de manière à connecter n'importe quelle ligne d'entrée choisie (A, B...) à n'importe quelle ligne de sortie choisie (a, b...).

2. Dispositif d'interconnexion selon la revendication 1, dans lequel les paires de premier point de contact et de second point de contact des premiers composants de commutation (1) sont disposées selon une structure matricielle ayant des lignes d'entrée (A, B...) qui sont disposées perpendiculairement aux lignes de sortie (a, b,...), dans lequel chaque paire de points de contact est positionnée à un point de croisement capable d'interconnecter une ligne d'entrée (A, B...) et une ligne de sortie (a, b...).

3. Dispositif d'interconnexion selon la revendication 2, dans lequel les premiers composants de commutation (1) sont disposés avec des rangées parallèles de points de contact dans la structure matricielle.

4. Dispositif d'interconnexion selon la revendication 3, dans lequel le second composant de commutation (4) est disposé avec une rangée de points de contact qui est perpendiculaire aux rangées parallèles de points de contact des premiers composants de commutation (1).

5. Dispositif d'interconnexion selon la revendication 3, dans lequel le troisième composant de commutation (6) est disposé avec une rangée de points de contact qui est parallèle aux rangées parallèles de points de contact des premiers composants de commutation (1).

6. Dispositif d'interconnexion selon la revendication 2, dans lequel :
les composants de commutation sont construits en tant que composants allongés ;
lesdits premiers composants de commutation (1) et ledit troisième composant de commutation (6) sont disposés parallèlement les uns par rapport aux autres dans la structure matricielle ; et
ledit second composant de commutation (4) est disposé perpendiculairement par rapport aux premiers composants de commutation et au troisième composant de commutation (1,6).

7. Dispositif d'interconnexion selon la revendication 1, dans lequel :
les premiers composants de commutation (1) sont orientés dans la direction des lignes correspondant aux lignes d'entrée (A, B...) à partir d'une ligne de téléphone connectée aux premiers points de contact des premiers composants de commutation respectifs et dans lequel les lignes de sortie (a, b...) sont connectées aux seconds points de contact des premiers composants de commutation respectifs ;
le second composant de commutation (4) est disposé perpendiculairement à la direction des lignes, ses premiers points de contact étant connectés aux lignes d'entrée (A, B...) et les seconds points de contact étant connectés à une ligne commune (5) ; et
le troisième composant de commutation (6) est orienté dans la direction des lignes telle que les premiers points de contact sont connectés à la ligne commune (5) et avec les seconds points de contact étant connectés aux lignes de sortie (a, b...).

8. Dispositif d'interconnexion selon l'une quelconque des revendications 1 à 7, dans lequel la disposition est une matrice de commutation.
